# EUROPEAN PATENT APPLICATION

(11) **EP 1 602 966 A1**
(43) Date of publication of application: **07.12.2005**
(21) Application number: 04012603.9
(22) Date of filing: 27.05.2004
(51) Int. Cl.: G02F 1/139, G02F 1/1339

(54) **Multi-domain liquid crystal display device**

(71) Applicant: Chunghwa Picture Tubes, Ltd., Jhongshan district Taipei Taiwan (TW)
(72) Inventor: Wang, Chung-I, Kaohsiung, Taiwan 812 (TW); Lin, Chen-Chi, Chia-I, County (TW); Lee, Chuen-Ru, Taoyuan City, Taoyuan 330 (TW); Lee, Wan-Lin, Jungjeng Chiu, Keelung 202 (TW)
(74) Representative: Winkler, Andreas Fritz Ernst

(57) **Abstract**

Two substrates constitute a liquid crystal display device, wherein one substrate has a multi-domain pattern thereon to divide a pixel into multi-domain regions, and the other substrate has a plurality of strip patterns thereon. Having injecting liquid crystal into cell between the two substrates, the multi-domain pattern and the strip patterns will divide the pixel to a form multi-domain homeotropic alignment mode liquid crystal display device.

## Description

### BACKGROUND OF THE INVENTION

### 1. Field of the Invention

This invention relates to a liquid crystal display device, and more particularly to a multi-domain homeotropic alignment mode liquid crystal display device.

### 2. Description of the Prior Art

Due to a viewing angle of the Twisted Nematic (TN) mode liquid crystal display being narrow and response times of gray-scale inversion and midtone being slow, applications of the liquid crystal display to flat panel display are limited, especially for the application to TV. For the problem of narrow viewing angle, it can be solved through the wide viewing angle technology based on the combination of TN mode liquid crystal and compensation film (TN+Film). A special film attached outside the liquid crystal panel can raise the horizontal viewing angle from 90-degree angle to 140-degree angle. However, the technology can not improve two problems of low contrast and slow response time, and the color-shift problem is also occurred.

Another technology for improving viewing angle is IPS (In-Plane Switching). In IPS, the alignment direction of the liquid crystal molecules is parallel to a glass substrate ,that is the difference between the TN+Film and IPS is. The viewing angle with IPS can achieve 170-degree angle as well as CRT display. Nevertheless, the technology still has some drawbacks. Due to the alignment of the liquid crystal molecules, pixel electrodes only are arranged on the array substrates, unlike TN mode. The electrodes are arranged as comb-shaped on a surface of the lower substrate. Nonetheless, that will cause the contrast to lower and so the brightness of the back light source must be increased. The contrast and the response time in IPS are not improved compared with the typical TFT-TN.

Hence, for improving the aforementioned problems of the contrast and the response time that do not solve yet, the VA (Vertical Alignment) is developed and expected that the display characteristics of high transparency, symmetrical wide viewing angle, short response time, without gray-scale inversion, and slight color shift can achieve. Recently, many technologies related to VA are developed, but the aforementioned display characteristics still can not entirely satisfy.

EP0884626 discloses the MVA (Multi-Domain Vertical Alignment). That is to form V-shaped bumps on the two glass substrates respectively to form different domains with different arrangement directions of nearby liquid crystals for improving the symmetrical arrangement of the liquid crystals and achieving the purpose of wide viewing angle. The horizontal and vertical viewing angle of the liquid crystal display manufactured according to MVA is more than 160-degree angle, even 170-degree angle. Furthermore, the response time can reduce to approach 25ms due to the bumps and winding electric-power lines which is about a half of the response time of IPS and TN, the displaying colors can be closer to the true color.

US6097464 discloses a novel structure similar to the above-mentioned MVA structure. It integrates the advantage of photo-spacer and develops the wide viewing angle technology of MHA (Multi-domain Homeotropic Alignment). The method of MHA is to form a cruciform bump structure around each pixel on one glass substrate, and to form a square bump structure around each pixel on the other glass substrate. The bumps control the liquid crystal therein to overturn toward four directions for forming multi-domain. The aperture ratio of MVA is not high and the aperture ratio of MHA is more than MVA, nevertheless, the pixel size is limit to less than 350µm. Therefore, if the MHA is applied to the liquid crystal display with larger pixel, the overturning time of the liquid crystals will increase and so movements' result in long wakes being left on the screen.

In view of the prior arts, there are still problems of low contrast and slow response time in the conventional TN, TN+Film, and IPS technologies, low aperture ratio in MVA technology, and the pixel size limitation in MHA.

### SUMMARY OF THE INVENTION

One of objectives of the present invention is to provide a liquid crystal display device for overcoming the drawbacks of low contrast and slow response time, low aperture ratio, and pixel size limitation in the conventional arts.

Another objective of present invention is to provide a multi-domain homeotropic alignment mode liquid crystal display device. The spacers therein can be replaced with the intersections of the bumps or the contact points formed on bumps and so the problems of spacers non-uniformly sprinkling or spacers gathering can be avoided.

Still another objective of present invention is to provide a liquid crystal display device to divide pixels into a plurality of domains with appropriate dimensions to maintain the characteristic of fast response for large-size liquid crystal displays or liquid crystal displays with larger pixels.

This invention provides a liquid crystal display device which comprises two substrates and a liquid crystal layer disposed therebetween. A multi-domain pattern is formed on the inner surface of one of the substrates for dividing a pixel of the liquid crystal display device into multiple domains. A plurality of strip patterns is formed on the other one of the substrates. The plurality of strip patterns and the multi-domain pattern together divide the pixel so that a multi-domain homeotropic alignment mode liquid crystal display device is formed.

The aforementioned strip patterns have a function of faster overturning liquid crystals, similar to that of the bumps, moreover, do not have the drawback of light leak. Therefore, the characteristics of high contrast, short response time, and wide viewing angle can be achieved by the present invention. Furthermore, the present invention can replace spacers with intersections of the bumps or the contact points formed on bumps and so the present invention doesn't have the problems of spacers non-uniformly sprinkling or spacers gathering. Further, to divide pixels into a plurality of domains with appropriate dimensions can maintain the characteristic of fast response for large-size liquid crystal displays or liquid crystal displays with larger pixels.

### BRIEF DESCRIPTION OF THE DRAWINGS

FIG. 1 is a schematic diagram of a pixel unit in a liquid crystal display device;
FIG. 2A-2C are schematic diagrams of bumps and slits according to a first preferred embodiment of the present invention;
FIG. 3A-3B are vertical views of arrangements of liquid crystals under OFF state and ON state in a domain divided by bumps and slits according to the first preferred embodiment of the present invention;
FIG. 4A-4B are 1 cross-sectional side view of arrangements of liquid crystals under the state with applying voltage and the state without applying voltage in a part of the domain divided by bumps and slits according to the first preferred embodiment of the present invention;
FIG. 5A-5B are respectively the vertical view and the cross-sectional side view of the pattern of four aligned square formed by bumps according to a second preferred embodiment of the present invention;
FIG. 6A-6B are respectively the vertical view and the cross-sectional side view of the bump of four aligned square and contact points on the bump according to a third preferred embodiment of the present invention;
FIG. 7A-7C are respectively the vertical view and the cross-sectional side view of the H-shaped bump plus the square-shaped bump, slits complementary to the bumps, and the combined shape according to a fourth preferred embodiment of the present invention;
FIG. 8A-8B are respectively the vertical view and the cross-sectional side view of the ++-shaped bump plus the square-shaped bump, and slits complementary to the bumps according to a fifth preferred embodiment of the present invention; and
FIG. 9A-9B are respectively the vertical view and the cross-sectional side view of the # -shaped bump plus the square-shaped bump, and slits complementary to the bumps according to a sixth preferred embodiment of the present invention.

### DESCRIPTION OF THE PREFERRED EMBODIMENT

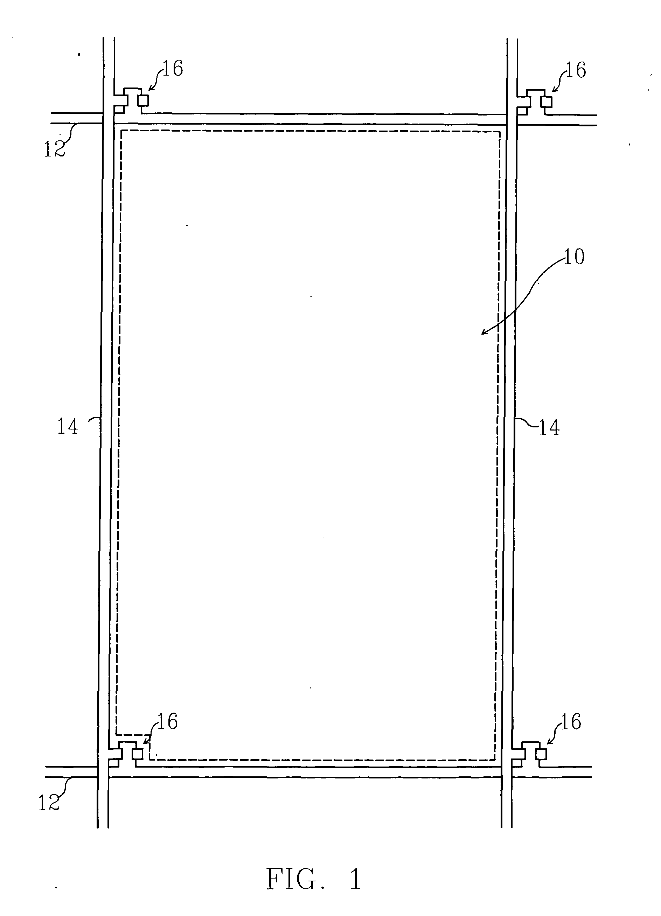

As shown in FIG. 1, it is a schematic diagram of a pixel unit in a liquid crystal display device. The region of the pixel is surrounded with the two adjacent gate lines 12 and the two adjacent data lines 14. The pixel electrode 10 is in the region and electrically connects with the drain of the transistor 16. The liquid crystal display device displays the predetermined image by controlling the pixel electrode 10 through the transistor 16.

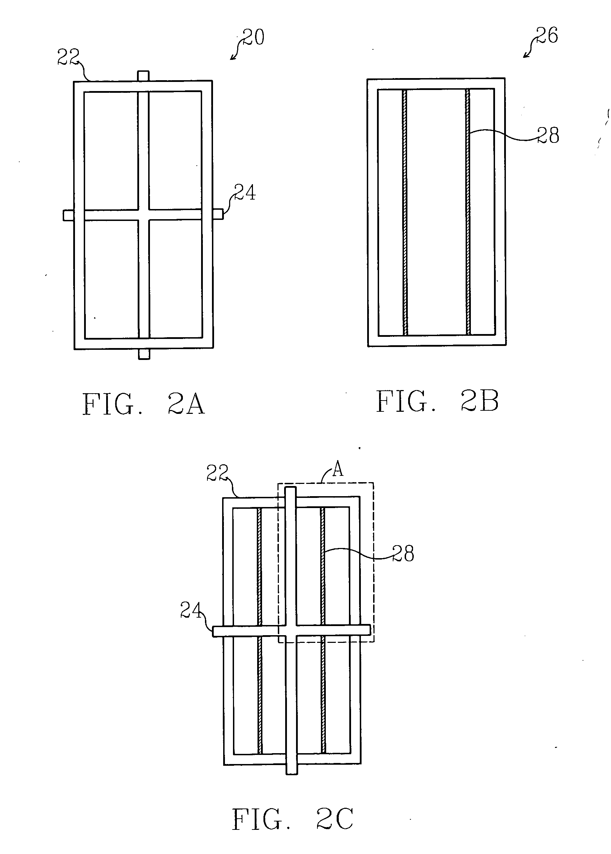

One preferred embodiment of the present invention is to form bumps of four aligned square on one of the substrates. As shown in FIG. 2A, multi-domain pattern 20 is composed of square (□)-shaped bumps 22 and +-shaped bumps 24. The square-shaped bumps 22 and the +-shaped bumps 24 may be formed simultaneously, or first one of them is formed and then the other is formed. FIG. 2A shows that the +-shaped bumps 24 is first formed and then the square-shaped bumps 22 is formed. The cross-sectional side view of the bumps can be convex with rounded top, convex with rectangular top, or convex with triangular top, preferably an averaging tilt angle of the convex with triangular top is from 3° to 25°.

The strip patterns 28 are formed on the other substrate, as shown in FIG. 2B. A multi-domain formed with the bumps 22 is divided into several domains which have an approximately same size by overlapping strip pattern 28. The strip patterns can be formed on the pixel electrode or the common electrode layer, preferably the structure of the strip patterns is slit. The cross-sectional side view of the slits can be concave with rounded bottom, concave with rectangular bottom, or concave with triangular bottom, preferably the structure of the slits are square.

FIG. 2C shows the liquid crystal display device after the two substrates was combined. After the two substrates was combined, the strip patterns 28 divides the domains formed by the multi-domain pattern 20, preferably divides domains of multi-domain pattern 20 into equal parts. In general, the liquid crystal pixels are square with 1:3 aspect ratio. Therefore, the divided domains by the multi-domain pattern 20 are also square. Preferably, the strip patterns are parallel to one side of the square domain and the side is the long side thereof to improve the response time of the liquid crystals.

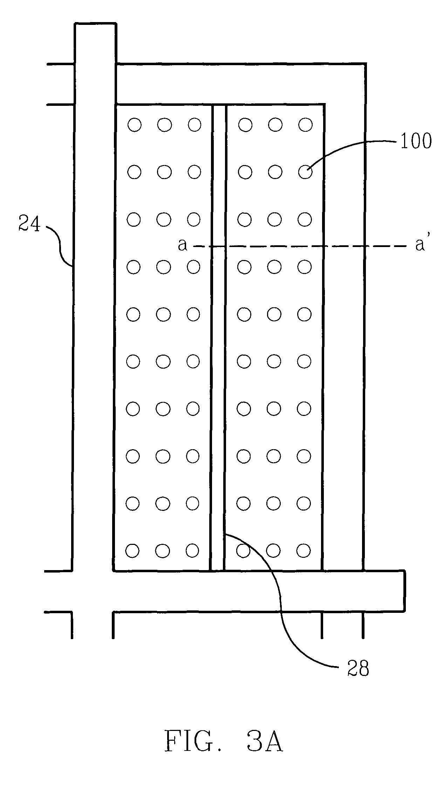

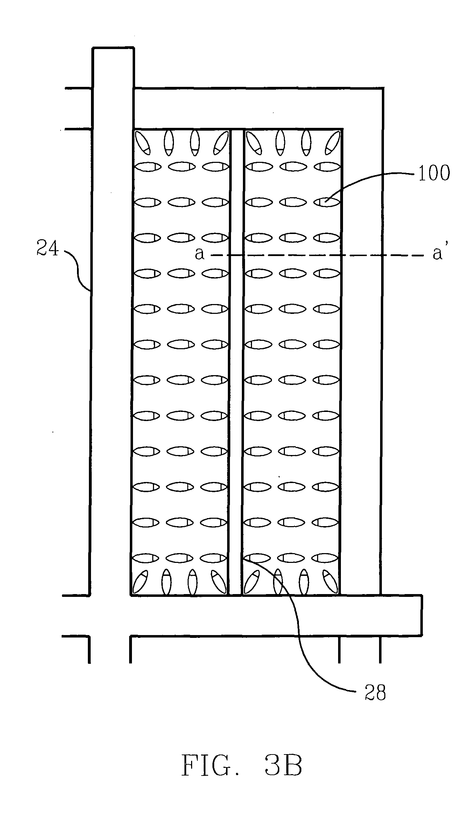

FIG. 3A and FIG. 3B are the vertical views of the liquid crystal molecules 100 with a pre-tilted direction in the region A of FIG. 2C under the state without and with applying voltage respectively. One side of the drawing of the liquid crystal molecules 100 with a line represents the downward side thereof and the other side without the line represents the upward side. According to the pre-tilted state of the liquid crystal molecules 100, it is recognized that the bumps 22, 24 and the strip pattern 28 can tie in with each other. Under the state without applying voltage, the liquid crystal molecules 100 are perpendicular to a surface of the support and so the liquid crystal molecules 100 on the bumps pre-tilt with a certain angle. Under the state with applying voltage, due to the effect of the electric field, the liquid crystal molecules 100 change the tilted angle for changing the transmittance of pixels.

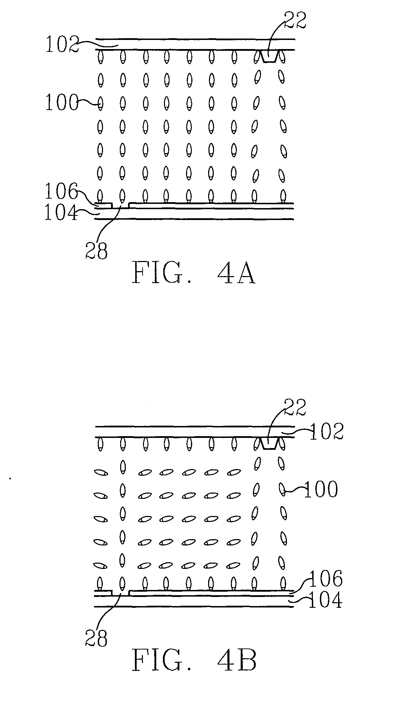

FIG. 4A and FIG. 4B are the vertical views of FIG. 3A and FIG. 3B along the line a'-a respectively. The bumps 22 are in one substrate 102 and a layer structure 106 with slits 28 is on the other substrate 104. Under the state without applying voltage (FIG. 4A), except the liquid crystal molecules 100 on the surface of bumps with a pre-tilted angle, all other liquid crystal molecules 100 are perpendicular to the surfaces of the substrates 102 and 104. Under the state with applying voltage (FIG. 4B), the intermediate liquid crystal molecules 100 change the tilted angle due to the influence of the electric field, but the liquid crystal molecules 100 on the surface of the bumps 22 mainly are influenced by the bumps and almost maintains the pre-tilted angle near that under the state without applying voltage. The liquid crystal molecules 100 on the surface of the substrates also mainly are influenced by the substrates and almost perpendicular to the surface of the substrates. Similarly, the liquid crystal molecules 100 in the region above the strip pattern 28 and perpendicular to the surface of the substrates are almost perpendicular to the surface of the substrate due to the influence of the slits. Hence, the arrangements of the liquid crystal molecules 100 in each domain have symmetrical arrangement directions and so it is expected that wide viewing angle can be achieved.

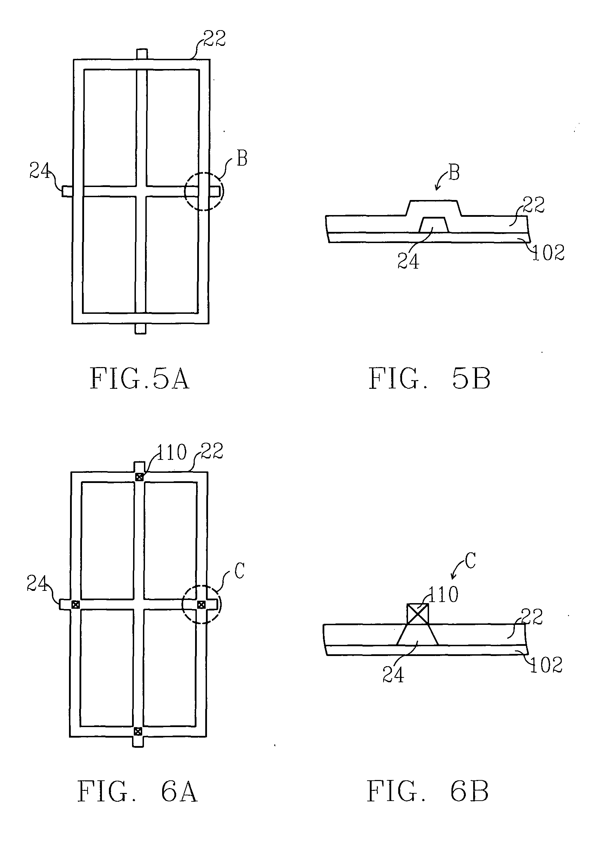

As aforementioned, the bumps 22, 24 can be formed on the substrate 102 during different steps. As shown in FIG. 5A, it is the second preferred embodiment of the present invention. The bumps of four aligned square are formed with two steps: first forming +-shaped bumps 24 and then forming square-shaped bumps 22 to form bumps of four aligned square. Therefore, the cross-sectional side view of the B region in FIG. 5B shows that the bumps 22 and 24 are overlapped with each other and so the overlapped regions are higher. Hence, the cell gap can be supported with the overlapped regions of the bumps 22 and 24 to replace spacers for avoiding the problems of spacers non-uniformly sprinkling or spacers gathering. The forming sequence of the bumps of the present invention are not limited, namely, square-shaped bumps 22 can be first formed and then +-shaped bumps 24 are formed to achieve the function of replacing the spacers.

If the bumps 22 and 24 are formed on the substrate 102 with the same step, the overlaped regions are not occurred and so the height of the bumps 22 and 24 are the same. The third embodiment of the present invention is to form contact points 100 on the bumps 22 and 24, e.g.: the intersection region C of the bumps 22 and 24 shown in FIG. 6A. Therefore, the height of the contact point 110 on the bumps 22 and 24 is higher, as shown in FIG. 6B that is the cross-sectional side view of C region. Hence, the cell gap of the present invention also can be replace spacers with forming contact points 110 on the bumps 22 and 24 and the problems of spacers non-uniformly sprinkling or spacers gathering can be avoided.

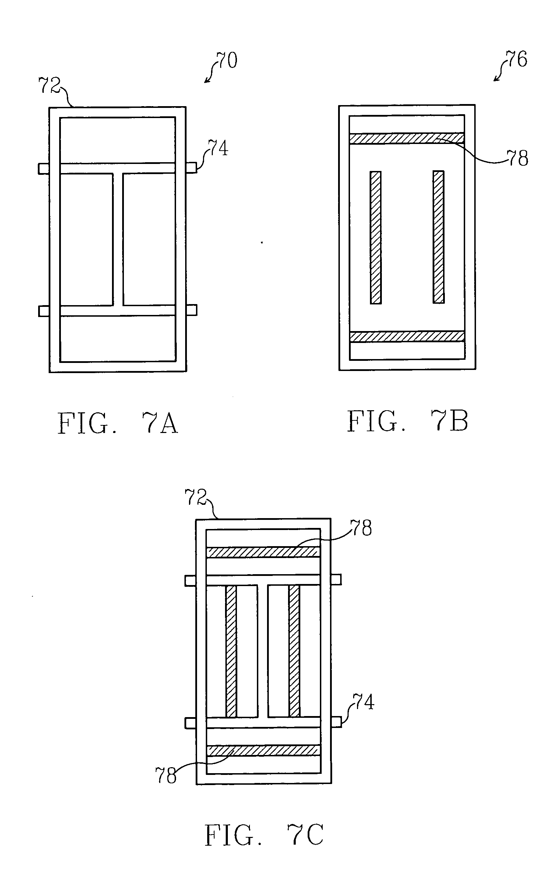

The fourth preferred embodiment of the present invention is shown in FIG. 7A to FIG. 7C. The manufacturing steps is to form the bumps 70 of the H-shaped pattern 74 and the square-shaped pattern 72 on one substrate, as shown in FIG. 7A and to form the strip pattern 78 on the other substrate. FIG. 7C shows the combined shape of the two substrates. The bumps and the slits tie in with each other and so the strip pattern 78 divides the domain formed by the bumps 70. Preferably, the strip pattern 78 divides the domains formed by the bumps 70 into equal parts and are parallel to the long side of the domains for improving the response time of the liquid crystals. The bumps 70 of H-shaped pattern 74 plus square-shaped pattern 72 divide a pixel into four domains of top, bottom, right, and left, preferably the shapes and dimensions of the four domains are the same. As shown in FIG. 7A, the shapes and dimensions of the four domains are the same, but the difference of the arrangement directions between top (bottom) and right (left) is 90-degree angle. Therefore, the ratio of the overturned liquid crystals in every direction are more uniform and the best displaying effect and wide viewing angle can be achieved. Furthermore, for users using the liquid crystal display device according to the present invention, the contrast and brightness of viewing the display device from different directions is closer and so the effect of wide viewing angle is better that the conventional liquid crystal display device. The cell gap can employed that disclosed in the second and third embodiment of the present invention to support. That is to support the cell gap by the overlapped regions of the H-shaped pattern 74 and the square-shaped pattern 72 or the contact points on the intersections of the H-shaped pattern 74 and the square-shaped pattern 72. The embodiment can make the ratio of the overturned liquid crystals in every direction uniformly for achieve the better effect of wide viewing angle (±160° degree).

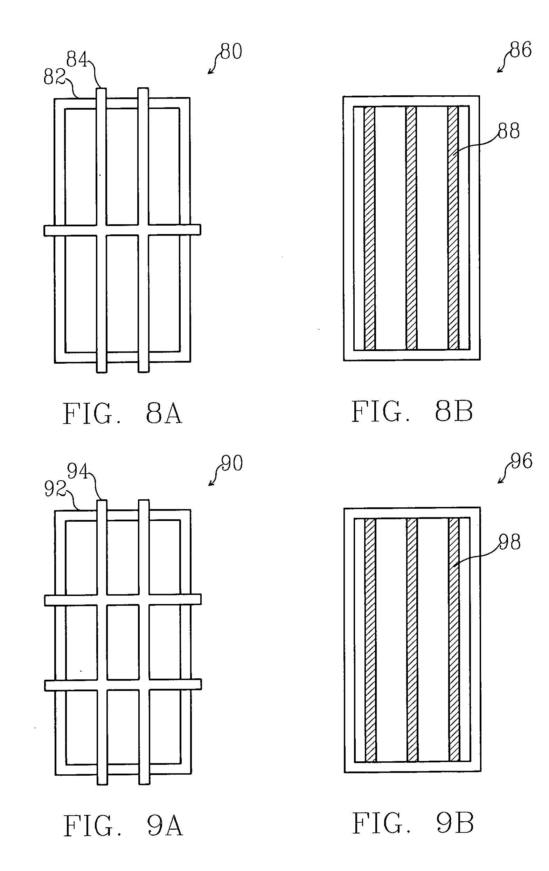

The present invention also aims at the application of large-size liquid crystal display. Except for the aforementioned embodiments, the present invention forms the bumps with different shapes on one substrate to divide pixels into more domains, and forms slits on the other substrate, wherein the amount of the slits are with respect to the domains divided by the bumps. The pixel is divided into a plurality of domains by both the bumps and the slits and the arrangement of the liquid crystals in different domains can complement with each other to achieve the wide viewing angle. For example, in the fifth preferred embodiment of the present invention, as shown in FIG. 8A and FIG. 8B, the bumps 80 of square-shaped pattern 82 and ++-shaped pattern 84 are formed on one substrate, and the strip pattern 88 are formed on the other substrate to divide the liquid crystal pixels into more domains.

In the sixth preferred embodiment of the present invention, as shown in FIG. 9A and FIG. 9B, the bumps 90 of square-shaped pattern 92 and #-shaped pattern 94 are formed on one substrate, and the strip pattern 98 are formed on the other substrate to divide the liquid crystal pixels into more domains. Hence, the present invention can divide pixels into a plurality of domains with suitable dimensions according to the dimension of pixels, preferably the dimensions of the divided domains are the same. Hence, except for providing wide viewing angle, the present invention can maintain the characteristic of fast response time due to each pixel divide into suitable domains. Therefore, the present invention does not limit to the dimension of the pixel that the present invention can apply to.

The liquid crystal display device of the present invention is a multi-domain homeotropic alignment mode, wherein pixels is divided into a plurality of domains having different arrangements of liquid crystals. The different arrangements of liquid crystals can complement with each other and so when users view the liquid crystal display device from different viewing angles, the difference in contrast and brightness is not large. Hence, the display device can achieve the effect of wide viewing angle.

The aforementioned liquid crystal display device comprises two substrates. Wherein one substrate has bumps for dividing pixels of said liquid crystal display device, and the other substrate has a plurality of strip patterns. When the two substrates are fabricated and liquid crystals are injected into therein, the strip patterns and bumps dividing said pixels to form a multi-domain homeotropic alignment mode liquid crystal display device.

One of the two substrates has a matrix composed of a plurality of transistors. The other substrate has a common electrode layer. In the present invention, the bumps and the plurality of strip patterns do not limit to form on the substrate having the common electrode layer or the substrate having the plurality of transistors. Preferably, the bumps only are formed on the substrate having the common electrode layer and the plurality of strip patterns are only formed on the substrate having the plurality of transistors. Therefore, to form bumps only on the substrate having the common electrode layer can solve a problem of bumps hard to form on the substrate having the plurality of transistors and so the yield can be raised and the cost can be reduced. Moreover, the plurality of strip patterns (in general, strip patterns are slits) have a function similar to that of the multi-domain pattern and so to add slits in the bumps can accelerate the overturning of liquid crystals. Further, the slits do not have the light leak of drawback of bumps and the contrast is not decreased.

The two substrates of the present invention can be attached polarizers respectively, and the difference of the polarizing directions thereof is 90-degree angle. At least a compensation film may be disposed between one of polarizers and the substrate that the polarizer is attached on for improving the color shift and increasing the range of viewing angle.

Compared with the conventional arts, the liquid crystal display device of the present invention provides really has well advantages. The present invention employs two substrates, wherein one substrate has a multi-domain pattern thereon for dividing pixels of the liquid crystal display device, the other substrate has a plurality of strip patterns. When the two substrate are fabricated and liquid crystals are injected into therein, the strip patterns and the multi-domain pattern dividing the pixels to form a multi-domain homeotropic alignment mode liquid crystal display device.

The aforementioned strip patterns have a function of faster responsive liquid crystals, similar to that of bumps, moreover, do not have the drawback of light leak. Therefore, the characteristics of high contrast, short response time, and wide viewing angle can be achieved by the present invention. Furthermore, the present invention can replace spacers with intersections of the bumps or the contact points formed on bumps and so the present invention doesn't have the problems of spacers non-uniformly sprinkling or spacers gathering. Further, to divide pixels into a plurality of domains with appropriate dimensions can maintain the characteristic of fast response for large-size liquid crystal displays or liquid crystal displays with larger pixels.

Although specific embodiments have been illustrated and described, it will be obvious to those skilled in the art that various modifications may be made without departing from what is intended to be limited solely by the appended claims.

The features disclosed in the foregoing description, in the claims and/or in the accompanying drawings may, both separately y and in any combination thereof, be material for realising the invention in diverse forms thereof.

## Claims

1. A liquid crystal display (LCD) device, comprising:
two substrates and a liquid crystal layer disposed therebetween, wherein a multi-domain pattern is formed on the inner surface of one of said substrates for dividing a pixel of the liquid crystal display device into multiple domains, and a plurality of strip patterns are formed on the other one of the substrates, the strip patterns and the multi-domain pattern together divide the pixel so that a multi-domain homeotropic alignment mode liquid crystal display device is formed.

2. The LCD device of claim 1, wherein the pixel includes a transistor and pixel electrode electrically connected with a drain of the transistor, formed on the inner surface of one of the substrates..

3. The LCD device of claim 2, wherein said multi-domain pattern is formed on the pixel electrode.

4. The LCD device of claim 3, wherein said multi-domain pattern includes a pattern surrounding the pixel and a pattern dividing the pixel.

5. The LCD device of claim 4, wherein a pattern dividing the pixel includes a "+" pattern.

6. The LCD device of claim 4, wherein a pattern dividing the pixel includes a "++" pattern.

7. The LCD device of claim 4, wherein a pattern dividing the pixel includes a "H" pattern.

8. The LCD device of claim 4, wherein a pattern dividing the pixel includes a "#" pattern.
